# EUROPEAN PATENT APPLICATION

(11) **EP 1 923 368 A1**
(43) Date of publication of application: **21.05.2008**
(21) Application number: 06023607.2
(22) Date of filing: 14.11.2006
(51) Int. Cl.: C04B 14/06, C04B 14/30, C04B 22/02, C04B 22/06, C04B 111/80

(54) **Method and compositions for improving the luminosity of roads and annexed buildings**

(71) Applicant: Invent Holdings Ltd., NASSAU (BS)
(72) Inventor: Rossi, Michele, 20068 Peschiera Borromeo MI (IT); Peitchev, Peter, 9800 Monaco (MC); Oldrini, Emanuele, 9800 Monaco (MC)
(74) Representative: Banfi, Paolo

(57) **Abstract**

The present invention provides compositions and materials displaying luminescent and light-reflecting properties and their uses in the construction, maintenance or repair of roads, bridges, annexed structures and buildings.

## Description

The present invention provides compositions and materials displaying luminescent and light-reflecting properties and their uses in the construction, maintenance or repair of roads, bridges, annexed structures and buildings.

Many patents and patent applications deal with the problem of improving the luminosity and thus the visibility of roads or related structures and buildings, including walls, floor, kerbs, curbs, etc., but in the majority of cases the proposed solutions involve the use of complex systems or difficult-to-handle and expensive materials and substances (see for instance JP10082023, JP11124808, JP2003138721, JP 10088025, JP11124808, JP2003138721, JP10088025, JP10219638, DE19738297, WO0061873, JP11081546, JP2002115219, JP2002155609, JP2002069913, JP2003321814, JP2004169480, JP2005188185, TW434354B, EP0921233, JP9053214, CA2144346, US4701069).

The current inventors have found that the same problem can be solved in an easy and cost-effective manner, by using a combination of a reflecting compound and a luminescent compound, to be applied onto the surface of roads, curbs, kerbs, walls such as inner gallery walls, road barriers, tunnels, underway passages and subways.

It is known that some inorganic compounds in the solid state possess high reflecting properties with respect to sun light and artificial light. In particular, the common sodium chloride salt, obtained by mines (rock salt) or sea (sea salt) appears bright when exposed to the light as well as silica and silicates in their natural mineral or synthetic forms, alumina, carbonates, sulphates and many other compounds.

Moreover, a number of compounds are known to possess luminescent properties, including activated zinc sulphide, rare earth oxides, mixed oxides and others: they are able to capture energy from sun light and artificial light and to release energy in the dark in form of a diffuse luminescence.

It has been found that the compounds having reflecting properties strongly enhance the brightness of luminescent pigments like zinc sulphide, either as a combination of the two components alone or as mixtures thereof with binding materials such as polymers and resins.

Accordingly, the invention provides a method for improving the luminosity of roads, bridges, galleries, tunnels or related structures and buildings, including e.g. curbs, kerbs, underway passages or subways, which comprises applying to the visible surfaces thereof a composition containing a compound having reflecting properties and a luminescent compound. The compound having reflecting properties and the luminescent compounds are preferably selected from the group consisting of sodium chloride, quartzite, silicon dioxide, dialuminium trioxide, calcium carbonate, calcium sulphate, and respectively from the group consisting of zinc sulphide, Al, Ba, Ca, Dy, Eu and Sr oxides, aluminium-strontium oxides doped with rare earth oxides, preferably containing Dy, Eu elements. Particularly preferred are the compositions containing sodium chloride and/or quartzite and/or silica gel (SiO₂) as reflecting materials and more preferably solid sodium chloride in form crystals having the size of 0.01 to 3 mm and silica gel in form of 0.01 to 0.3 mm gel. However, natural silica and silicates, synthetic silica and silicates, various forms of calcium sulphate and calcium carbonates, titanium dioxide represent valid alternatives. In a most preferred embodiment, the composition of the invention includes sodium chloride and a luminescent compound selected from zinc sulphide, Al, Ba, Ca, Dy, Eu and Sr oxide.

The reflecting/luminescent compounds weight ratios may range from 200 to 50.

The composition can be in a solid, semi-solid or liquid form, e.g. a mixture of salts in the solid state, a gelly material or a solution, dispersion or suspension of solids in a suitable liquid vehicle, including mortars, cements, coating compositions, e.g. paints, varnishes, lacquers, filling pastes, pastes or solids for colouring.

In a preferred embodiment, the solid composition according to the invention contains sodium chloride or quartzite in admixture with a luminescent compound which is selected from activated zinc sulphide and mixed aluminium-strontium doped with rare earth oxides, preferably Al, Ba, Ca, Dy, Eu or Sr oxide. In a particularly preferred embodiment, the solid mixture containing sodium chloride is dispersed on the surface of iced roads to obtain at the same time a de-icing effect and brightness increase.

Alternatively, the composition may be provided in a semi-solid or liquid form in a suitable vehicle, which can be water or an organic solvent, optionally in the presence of a binder that allows adhesion of the product to the surfaces of building materials, such as bricks, slabs, blocks or posts. The binder is preferably a cement-derived product, or a mixture of cement-derived products and elastomeric material, such as Betek (Grace) and Kerabond (Mapei), or a synthetic organic polymer, more preferably an epoxy resin or a polyurethane.

In a preferred embodiment, the the semi-solid composition according to the invention is a jelly paste containing sodium chloride or silica gel in admixture with Al, Ba, Ca, Dy, Eu, Sr oxides dispersed in a water-based epoxy resin.

To prepare the composition or mixtures according to the invention, a suitable amount of reflecting (70-99%) and luminescent compounds (1-5%) are mixed by means of concrete mixer using a suitable quantity of water (1-10%) as a dispersing agent, then adding the binder when requested in the specific application (5-30%) to obtain solid, semi-solid or viscous liquid compositions.

As applications of the invention, the dispersion of a small quantity of the luminescent zinc sulphide into a large quantity of sodium chloride as an anti ice agent, and the coverage of concrete- structures connected to road and building yards can be taken as typical but not limiting examples.
(1) In the first application, a dispersion of 0.15 Kg of luminescent zinc sulphide powder having a brightness of 67 mcd/m² after 5 min, according to German DIN 67510-1 certification, was suspended in water (1 Kg) and added to 15 Kg of sodium chloride (common coarse salt) in a mechanical mixer to obtain a dispersion of the yellow powder on the surface of the salt.
   After exposure to the day light, the prepared material was manually dispersed on 300 m² of a road covered by approx. 4 cm layer of fresh snow in order to prevent the formation of slab of ice. In the dark the diffuse luminescence on the road was clearly visible allowing to distinguish the limit of the carriageway, thus improving the safety of the driver.
(2) In the second application, 13 g of a luminescent powder containing Al, Ba, Ca, Dy, Eu, Sr oxides having an initial lightness of 11.28 cd/m², were carefully dispersed with a glass rod firstly into 400 g of a bi-component, water based epoxy resin as a binder.
   Then, to this uniform product, 1600 g of fine table salt (sodium chloride) and 20 ml of water were added and thoroughly mixed. The resultant jelly-like paste was spread by a trowel on a concrete slab (0.6 m²) and cured 24 hours at room temperature. The resultant panel showed a high luminescent property in the dark.
(3) The preparation (2) was repeated except that 1600 g of silica gel having the size 0.6-1.4 mm were employed instead of 1600 g of sodium chloride. The resultant panel showed a high luminescent property in the dark.
(4) The preparation (2) was repeated except that 1600 g of quartzite having the size 0.5-1.0 mm were employed instead of 1600 g of sodium chloride. The resultant panel showed a high luminescence in the dark.
(5) For comparison, the experiment (2) was repeated in a similar manner except that 1600 g of a non reflecting material, namely white cement powder, was used instead of the reflecting material sodium chloride used in (1) and silica gel used in (3). The resultant panel showed a poor luminescent property in the dark.

After 1h exposure to the artificial light of a 100 watts standard lamp, the picture of the three panels concerning the tests (2), (3) and (5) were taken in the dark without the use of the flash. The result is reported in Figure.

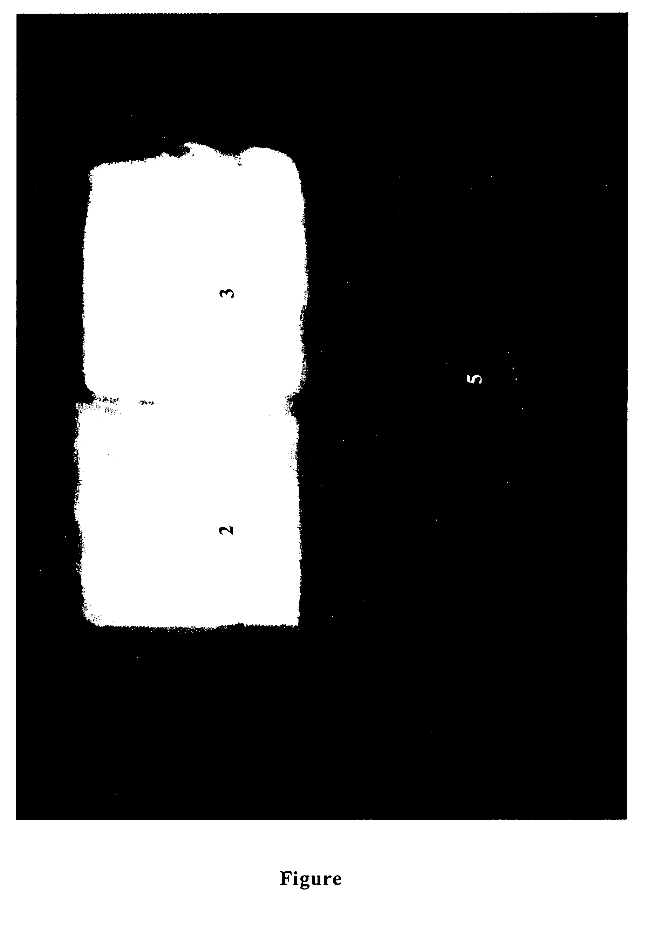

## Claims

1. A method for increasing the luminosity of roads, bridges, galleries, tunnels or related structures and buildings, which comprises applying to the visible surfaces thereof a composition containing a compound having reflecting properties and a luminescent compound.

2. A method according to claim 1, wherein the compound having reflecting properties is selected from the group consisting of sodium chloride, quartzite, silicon dioxide, dialuminium trioxide, calcium carbonate, calcium sulphate.

3. A method according to claims 1-2, wherein the luminescent compound is selected from the group consisting of zinc sulphide, Al, Ba, Ca, Dy, Eu and Sr oxides, aluminium-strontium oxides doped with rare earth oxides, preferably containing Dy, Eu elements.

4. A method according to claims 1-3, wherein the reflecting/luminescent compound weight ratio ranges from 200 to 50.

5. A method according to claims 1-4, wherein said composition is in a solid, semi-solid or liquid form.

6. A method according to claim 5, wherein said composition is in the form of a solid mixture.

7. A method according to claim 6, wherein said mixture contains sodium chloride and a luminescent compound which is selected from the group consisting of zinc sulphide, aluminium and strontium oxides doped with Ba, Ca, Dy, Eu elements.

8. A method according to claim 7, wherein the mixture is dispersed on the surface of iced roads.

9. A method according to claim 5, wherein said composition is a gelly material or a solution, dispersion or suspension of solids in a liquid vehicle.

10. A method according to claim 9, wherein said composition is in the form of mortars, cements, paints, varnishes, lacquers, filling pastes, pastes or solids for colouring.

11. A method according to claim 9, wherein said composition further contains a binder that allows adhesion of the product to the surface of building materials.

12. A method according to claim 11, wherein said binder is an epoxy resin or a polyurethane.

13. A method according to any previous claim, wherein the reflecting substance is sodium chloride.

14. A road, bridge, gallery, tunnel or a related buildings, obtainable by the method of claims 1-13.

15. A building material used in the construction of roads, bridges, galleries, tunnels or a related buildings, the visible surface of which is coated with a composition containing a compound having reflecting properties and a luminescent compound, said compounds and compositions being as defined in claims 1-13.

16. A building material as claimed in claim 15, which is a brick, slab, block or post.
